# EUROPÄISCHE PATENTSCHRIFT

(11) **EP 1 211 656 B1**
(45) Veröffentlichungstag und Bekanntmachung des Hinweises auf die Patenterteilung: **03.08.2005**
(21) Anmeldenummer: 01125475.2
(22) Anmeldetag: 07.11.2001
(51) Int. Cl.: G08G 1/0968, H04H 1/00, H04Q 7/20

(54) **Kommunikationsfähige Navigationsbake**
Navigation beacon with communications capabilities
Balise de navigation capable de communiquer

(30) Priorität: 13.11.2000 DE 10056207
(43) Veröffentlichungstag der Anmeldung: 05.06.2002
(73) Patentinhaber: Deutsches Zentrum für Luft- und Raumfahrt e.V., 51147 Köln (DE)
(72) Erfinder: Angermann, Michael, Dipl.-Ing., 82166 Gräfelfing (DE); Steingass, Alexander, Dipl.-Ing., 82205 Gilching (DE); Robertson, Patrick, Dr., 82541 Ammerland (DE)
(74) Vertreter: von Kirschbaum, Albrecht, Dipl.-Ing.

(56) Entgegenhaltungen:
- EP-A- 0 538 514
- EP-A- 1 024 628
- WO-A-00/43891
- WO-A-00/65497

## Beschreibung

Die Erfindung betrifft eine kommunikationsfähige Navigationsbake mit einer Kommunikationsschnittstelle zur Abgabe von Positionsdaten als erster Dienst und zur Übermittlung von Informationsdaten anderer Dienste an mobile elektronische Geräte, die von Personen zu deren Navigation und/oder Wegfindung mitgeführt sind und einen Look-up-Dienst nutzen, wobei die Kommunikationsschnittstelle als flexible Schnittstelle zur protokollmäßigen Durchführung einer einen Dienst betreffenden Absprache mit den mobilen Geräten realisiert ist.

Zur Orientierung und Wegfindung werden Empfänger verwendet, die mit einem Satellitennavigations-System (GPS; Global Positioning System) zusammenarbeiten. GPS-Empfänger funktionieren bekanntlich nur bei freier Sicht zu mehreren Navigationssatelliten. In Gebäuden ist daher kein Satellitennavigationsdienst möglich. Um dieses Problem zu beheben, können Baken eingesetzt werden, welche die lokale Position in Datenform aussenden. Die erwähnten Baken geben ihre Position gewöhnlich per Funk oder Infrarot aus. Die Positionsdaten können von einem mobilen, vorzugsweise tragbaren elektronischen Gerät, z.B. einem Mobilfunktelefon oder einem speziell als elektronischem Reisebegleiter ausgelegten persönlichen digitalen Assistenten, empfangen werden, um einer Person die Navigation bzw. Wegfindung in einem Gebäude zu ermöglichen.

Mit einer solchen Kombination ist die Navigation ohne GPS-Satellitenempfänger selbstverständlich auch im Freien möglich, z.B. in Fußgängerzonen, Straßen, öffentlichen Plätzen und dergleichen. Derartige Baken geben allerdings nur eine reine Position an, so dass die eigentliche Navigation und Wegfindung zu einem Ziel trotzdem noch verhältnismäßig kompliziert, z.B. unter Zuhilfenahme von Landkarten und Stadtplänen, auszuführen ist. Ihre Position angebende Baken sind also in ihrer Leistungsfähigkeit beschränkt, weil diese Position in einem Kontext stehen muss, welcher der nutzenden Person bekannt ist. Die Nutzerperson bzw. ihr mobiles Gerät muss diese Position auf einer Karte oder einem Plan eintragen, die bzw. den sie besitzen muss.

Im Rahmen von öffentlichen Verkehrsmitteln sind auch Fahrgastinformationssysteme bekannt, die Fahrpläne oder Ankunftszeiten lokal, d.h. vor Ort, elektronisch anzeigen oder aussenden oder diese im Internet angeben. Eine genaue Navigation und/oder Wegfindung zu einem Ziel ist aber für reisende Personen mit solchen Systemen nicht möglich.

Aus WO 00/65497 ist ein System zum Verbessern der Versorgung von Reisenden mit Reiseinformationen bekannt, wobei ein Reisebegleiter, der als Mensch-Maschine-Schnittstelle fungiert und/oder eine Mensch-Maschine-Schnittstelle steuert, ein oder mehrere Reiseassistenten, die mit dem Reisebegleiter zusammenwirken, und mindestens eine Informationen anbietende Einheit vorgesehen sind, mit welchen der/die Reiseassistent/en über den Reisebegleiter ständig oder temporär in Verbindung steht/stehen. Bei diesem System wird das Konzept einer flexiblen Schnittstelle verwendet, wobei Schritte des Nachschlagens und Eintretens in einem/n Look-up-Dienst vorgesehen sind. Hierdurch werden Dienste, welche einem Reisenden dienlich sind, angekündigt, aufgefunden und verwendet. Beispiele sind Buchungssysteme, Reisepläne und dergleichen. Bei diesem bekannten System kann eine fest installierte Bake vorgesehen sein, die dem vom Reisenden mitgeführten Reisebegleiter dessen aktuellen Aufenthaltsort als Positionsbestimmung mitteilt.

Der Erfindung liegt die Aufgabe zu Grunde, Navigationsbaken zu schaffen, die in Datenform nicht nur reine Positionen, sondern auch andere Dienste wie beispielsweise Umgebungskarten, Wegempfehlungen oder Fahrpläne ausgeben können, so dass einer reisenden Person, die ein zum Empfang dieser Daten ausgelegtes, mobiles elektronisches Gerät mit sich führt, die Navigation und die Auffindung des geeigneten Weges zu einem gewünschten Ziel ohne Komplikationen ermöglicht wird.

Gemäß der Erfindung, die sich auf eine Navigationsbake der eingangs genannten Art bezieht, ist die Lösung dieser Aufgabe gekennzeichnet durch eine Eintragung eines über den Dienst der reinen Positionsangabe hinausgehenden Primitivdienstes oder mehrerer derartiger Primitivdienste, die einen Weg zu einem Ziel und/oder Zwischenziel beschreiben oder die Status-Informationen auf den mobilen Geräten verändern und aktualisieren, über ein Look-up-Verfahren bei einem als Algorithmus realisierten Look-up-Dienst zusammen mit allen zur Nutzung der Bakendienste notwendigen Informationen.

Vorteilhafte und zweckmäßige Weiterbildungen und Ausführungsmöglichkeiten sind in den sich auf den Anspruch 1 unmittelbar oder mittelbar rückbeziehenden Unteransprüchen angegeben.

Die Erfindung geht von einer Navigationsbake aus, die wesentlich mehr Funktionalitäten als nur die Übermittlung ihrer Position bieten soll. Beispielsweise kann die Bake eine Wegbeschreibung zum Ziel des Nutzers oder die Ankunftszeit eines Verkehrsmittels an einer bestimmten Haltestation/Ziel, die Positionen der nächsten Baken und ähnliche Informationen liefern. Um diese Informationen, die im folgenden auch als Dienst bezeichnet werden, anzubieten, ist eine ausführliche Kommunikation zwischen der Navigationsbake und dem erwähnten mobilen Gerät notwendig.

Die Art und Weise, wie diese Kommunikation abzulaufen hat, ist prinzipiell schwierig. So müsste das mobile Gerät zunächst herausfinden, welche Dienste die Bake anbieten kann, und dann prüfen, ob diese Dienste auch für den Nutzer relevant bzw. überhaupt nutzbar sind, z.B. ob notwendige Landkarten vorhanden sind. Der betreffende Dienst der Bake könnte dann in Anspruch genommen werden. Probleme würden auftreten, wenn das mobile Gerät etwaige Dienste der Bake nicht kennt und somit nicht nutzen kann oder, wenn es weitere Informationen, wie z.B. Karten oder Pläne, nicht besitzt. Es dürften dann nur die Dienste der Bake in Anspruch genommen werden, die zum einen der Bake bekannt und möglich sind und zum anderen auch dem mobilen Gerät bekannt und von diesem nutzbar sind.

Modernere Baken müssten dann eine Vielzahl alter Dienste anbieten, um rückkompatibel zu sein, und ihre neuen, besseren Dienste unter Umständen nur von den modernsten mobilen Geräten nutzbar. In allen Fällen wäre dann auch der Kommunikationsaufwand zwischen Bake und mobilem Gerät aufwendig, was auf Kosten der Batteriedauer der Geräte geht und wertvolle Funkbandbreite oder Übertragungsbandbreite kostet.

Eine gemäß der Erfindung ausgebildete Navigationsbake kann nicht nur ihre Position z.B. per Funk, Infrarot, akustisch oder drahtgebunden ausgeben bzw. aussenden, sondern sie ermöglicht die Übermittlung anderer Dienst und eine Absprache mit dem nutzenden Geräten, da sie mit einer als flexible Schnittstelle realisierten Kommunikationsschnittstelle ausgestattet ist.

Der Look-up-Dienst kann beispielsweise mittels des so bezeichneten JINI™-Systems betrieben werden.

Die Informationen, welche zur Nutzung der Dienste der Bake notwendig sind, können Algorithmen und zugehörige Daten sein, welche auf dem mobilen Gerät als Algorithmus ablaufen und von dort die notwendigen Kommunikationsanfragen an die Bake steuern. Diese Algorithmen und zugehörige Daten sind bakenspezifisch, denn sie implizieren Fähigkeiten der Bake, die jedoch dem mobilen Gerät nicht bekannt sein müssen. Diese Algorithmen und zugehörige Daten können auch das mobile Gerät dazu veranlassen, ein bestimmtes Signal abzustrahlen, um von der Bake gepeilt und/oder geortet zu werden.

Diese Algorithmen und zugehörige Daten sind in der Lage, Informationen, die auf dem mobilen Gerät gespeichert sind oder dort verfügbar sind, oder Dienste, die dem mobilen Gerät zur Verfügung stehen, z.B. Kommunikationsdienste, zu erkennen und zu bearbeiten. Dies setzt eine gewisse Standardisierung dieser Informationen voraus. Diese Informationen können physikalisch im Speicher des mobilen Geräts stehen oder in einer mit diesem Gerät verbundenen weiteren Einheit.

Diese Algorithmen müssen nicht ausschließlich auf dem mobilen Gerät ablaufen, sondern können auf Bake und/oder mit dieser verbundenen weiteren Recheneinheiten und mobilen Geräten verteilt ablaufen. Die Verwaltung dieser Aufteilung kann mittels RMI (Remote Method Invocation), z.B. von Java™, oder beispielsweise mittels JINI™ durchgeführt und überwacht werden. Im Extremfall wird der Algorithmus nur vom mobilen Gerät gestartet und läuft dann nicht mehr auf diesem.

Die von der Navigationsbake angebotenen Dienste sind auf einem hohen Abstraktionsniveau definiert und werden hier als Primitivdienste bezeichnet. Beispiele solcher hochabstrahierter Primitivdienste können sein: "Zeige den Weg an das Ziel, welches im mobilen Gerät gespeichert ist!" oder "Ergänze den Status des mobilen Gerätes!". Eine diesbezügliche Erläuterung wird später noch anhand von Beispielen ausgeführt. Diese Primitivdienste werden von Anfang an definiert, nicht jedoch ihre genaue Realisierung.

Die mobilen Geräte, welche die Dienste nutzen wollen, müssen nur in der Lage sein, die entsprechenden Look-up-Dienste zu finden und die dort eingetragenen Dienste in Anspruch zu nehmen, d.h. sie müssen die dort eingetragenen Primitivdienste interpretieren können.

Nicht alle Baken müssen unbedingt immer ihren Dienst anwerben, indem sie regelmäßig ein Signal senden, welches beinhaltet, dass sie einen Dienst bereitstellen können. An sich passive Baken können aktiv geschaltet werden, falls sie von einem mobilen Gerät ein Signal empfangen, welches angibt, dass das mobile Gerät einen Dienst benötigt. Diese Konfiguration spart Übertragungskapazität und Stromverbrauch der Bake.

Die Bake kann eine Kompensation der in der Umgebung vorherrschenden Magnetkompassrichtung aussenden, die durch Störungen des Erdmagnetfeldes verfälscht ist. Bei der Verwendung eines Kompasses zur Orientierung wird dessen Genauigkeit verbessert, falls dem Nutzer des Kompasses eine solche Kompensation bekannt ist. Diese Aussendung kann auch die zu erwartende Genauigkeit eines Kompasses in der Umgebung der Bake zum Gegenstand haben. Die Bake kann dann beispielsweise angeben, dass in ihrer Umgebung ein Kompass gut, schlecht oder unbrauchbar ist.

Die Erfindung wird im folgenden anhand von zwei Beispielen erläutert.

Der Primitivdienst "Zeige den Weg an das Ziel, welches im mobilen Gerät gespeichert ist!" kann wie folgt in einer Analogie verstanden werden: Man stelle sich vor, eine Person fragt in einer fremden Stadt einen Ortskundigen nach dem besten Weg zum Flughafen. Diese Erkundigungsweise ist besser als den Ortskundigen nach seinem momentanen Aufenthaltsort zu fragen und dann selbständig die weiteren Schritte zu bestimmen. Es könnte nämlich z.B. der Fall sein, dass der Ortskundige über einen Busdienst zum Flughafen Bescheid weiß.

Im ersten Beispiel soll als Primitivdienst der Dienst "Zeige den Weg an das Ziel, welches im mobilen Gerät gespeichert ist!" dienen. Dieser Dienst wird von einer Bake per Funk bei einem Look-up-Dienst eingetragen, zusammen mit einem Algorithmus, der vom Nutzer des Dienstes, hier einem Mobiltelefon, ausgeführt werden kann. Dieser Algorithmus sucht nun auf dem Mobiltelefon nach einem dort eingetragenem Ziel, z.B. nach dem Reiseziel der das Mobiltelefon nutzenden Person oder nach einem auf dem Wege dorthin zu erreichenden Zwischenziel, wobei das Ziel der Bake bekannt ist.

Das Ziel ist in einer der Bake bekannten Art und Weise gespeichert und repräsentiert, z.B. in einer Speicherzelle mit dem Namen "Destination". Ebenso können die Zwischenziele als Liste oder Feld im Speicher stehen, z.B. mit einem Namen wie "IntermediateDestinationList". Der Algorithmus kann nun mit der Bake in Verbindung treten, und von dieser die notwendigen Informationen zum Erreichen des Ziels bzw. zunächst des Zwischenziels einholen. Dies kann z.B. eine Wegbeschreibung sein und/oder eine Karte. War die Bake nicht in der Lage ein Ziel zu erkennen oder ist die Bake nicht in der Lage gewesen, überhaupt solche Anweisungen zu geben, so kann sie zumindest dem Nutzer anzeigen, wo er sich befindet, bzw. einen entsprechenden Eintrag im Speicher des Mobiltelefons vornehmen.

Im zweiten Beispiel soll als Primitivdienst nun der Dienst "Ergänze den Status des mobilen Gerätes!" dienen. Dieser Dienst wird von einer Bake per Funk bei einem Look-up-Dienst eingetragen, zusammen mit einem Algorithmus, der vom Nutzer des Dienstes ausgeführt werden kann, wobei der Nutzer des Dienstes das mobile Gerät ist, welches in diesem Beispiel als ein Mobiltelefon ausgeführt ist. Dieser Algorithmus sucht nun auf dem Mobiltelefon nach einem dort gespeicherten Status-Objekt, welches den Status des Nutzers repräsentiert. Dies kann z.B. die aktuelle Position sein, eine topologische Repräsentation des geplanten Ziels und des Weges dorthin sowie die dafür vorgesehenen Verkehrsmittel.

Das Status-Objekt repräsentiert in diesem Beispiel, dass die nutzende Person vom Ort A zum Ort C reisen möchte, und zwar per Bus vom Ort A zum Ort B und zu Fuß vom Ort B zum Ort C, und ferner den Ort, an dem sich die nutzende Person gerade befindet (oder, dass dieser Ort unbekannt ist). Die Form des Status-Objekts ist der Bake bekannt und kann auf eine in der objektorientierten Programmierung bekannte Art und Weise geschehen, z.B. als vererbtes Objekt, dessen Datenfeldnamen, Schnittstellen und Methoden bekannt sind. Der Algorithmus, welcher von der Bake übermittelt wurde, ist in der Lage, dieses Objekt mit seinen Inhalten und Eigenschaften zu erkennen, insbesondere erkennt er die der Bake bekannten Zielorte A, B und C in diesem Objekt, und kommuniziert per Funk nun mit der Bake, um von ihr z.B. zu erfahren, dass es einen Bus direkt vom Ort A zum Ort C gibt.

Dies wird im Status-Objekt auf dem Mobiltelefon vermerkt, zusammen mit den Fahrzeiten des Busses. Die entsprechenden Anweisungen werden dem Nutzer mitgeteilt. Eine weniger leistungsfähige Bake hätte nur die aktuelle Position im Status-Objekt auf dem Mobiltelefon ergänzen können, da der entsprechende Algorithmus, welcher zur Bake gehört, dazu fähig ist, diesen Platzhalter, z.B. "Aktuelle_Position", im Status-Objekt zu finden, und die aktuelle Position der Bake dort einzutragen.

Falls der Algorithmus nicht auf dem Mobiltelefon ablaufen soll, können alternativ dazu das ganze Status-Objekt oder Teile hiervon auf die Bake ausgelagert werden, um dort ausgeführt zu werden. Ferner kann das Status-Objekt ganz oder teilweise auf einer weiteren Recheneinheit gespeichert sein, mit der das Mobiltelefon in Verbindung steht.

Durch die Verwendung der Primitivdienste ist die Fähigkeit der Baken in vorteilhafter Weise in Zukunft ausbaubar, obwohl die Nutzer der Bake nicht unbedingt diese Fähigkeiten im voraus kennen müssen. Die Primitivdienste beschreiben einen Dienst auf einem höheren Abstraktionsniveau als der Dienst der reinen Positionsangabe.

## Patentansprüche

1. Kommunikationssystem, bestehend aus einer kommunikationsfähigen Navigationsbake und mindestens einem von einer Person zu deren Navigation und/oder Wegfindung mitgeführten, mobilen elektronischen Gerät, wobei die Navigationsbake zur Abgabe von Positionsdaten als erster Dienst und zur Übermittlung von Informationsdaten anderer Dienste an die einen Look-up-Dienst nutzenden mobilen elektronischen Geräte mit einer Kommunikationsschnittstelle ausgestattet ist, die als flexible Schnittstelle zur protokollmäßigen Durchführung einer einen Dienst betreffenden Absprache mit dem mindestens einen mobilen elektronischen Gerät realisiert ist, **dadurch gekennzeichnet, dass** das Kommunikationssystem eingerichtet ist, die folgenden Schritte auszuführen: dass ein über den Dienst der reinen Positionsangabe hinausgehender Primitivdienst bei dem als Algorithmus realisierten Look-up-Dienst eingetragen wird, dass der Primitivdienst in Form des Algorithmus von der Navigationsbake über die Kommunikationsschnittstelle zu einem den Look-up-Dienst nutzenden mobilen Endgerät übermittelt wird, dass der in Form eines Algorithmus an das mobile Gerät übermittelte Primitivdienst einen Weg zu einem Ziel und/oder einem Zwischenziel beschreibt oder ein auf dem mobilen elektronischen Endgerät gespeichertes, den Status des Nutzers repräsentierendes Status-Objekt mit seinen Inhalten und Eigenschaften erkennt, verändert und aktualisiert, und dass der auf das mobile elektronische Gerät übermittelte Algorithmus über die Kommunikationsschnittstelle mit der Navigationsbake zur Einholung von die jeweiligen Ziele bzw. Zwischenziele betreffenden Informationen bzw. zum Einholen und Vermerken einer Aktualisierung des Status-Objekts des mobilen elektronischen Geräts kommuniziert.

2. Kommunikationssystem nach Anspruch 1, **dadurch gekennzeichnet, dass** über die Kommunikationsschnittstelle dem nutzenden mobilen Gerät Algorithmen und/oder Algorithmenaufrufe zur Verfügung gestellt werden, welche die Bakensteuerung übernehmen.

3. Kommunikationssystem nach Anspruch 2, **dadurch gekennzeichnet, dass** die Algorithmen so ausgelegt sind, dass sie Informationen des Status-Objekts auf dem mobilen Gerät oder solche Informationen, die dem mobilen Gerät zur Verfügung stehen, auslesen und/oder verändern.

4. Kommunikationssystem nach Anspruch 2 oder 3, **dadurch gekennzeichnet, dass** die Algorithmen so ausgelegt sind, dass das mobile Gerät dazu veranlasst wird, ein bestimmtes Signal abzustrahlen, um von der Navigationsbake gepeilt und/oder geortet zu werden.

5. Kommunikationssystem nach Anspruch 3, **dadurch gekennzeichnet, dass** die von den Algorithmen veränderbaren Informationen die von einer reisenden Person zu nehmende/n Wegroute/n, Karten, Ankunftszeiten von Fahrzeugen, insbesondere Taxi, Bus, Bahn, in denen sich ein mobiles Gerät befindet, die aktuelle Position der Bake oder des mobilen Geräts, Fahrpläne und Routen von Verkehrsmitteln oder Hinweise zu Veranstaltungen, Restaurants und Hotels in der Umgebung, zu Touristeninformationen, Fremdenverkehrsämtern, Tankstellen, Geschäften, Ämtern, Krankenhäusern und dergleichen sind.

6. Kommunikationssystem nach einem der vorhergehenden Ansprüche, **dadurch gekennzeichnet, dass** als Information eine Kompensationsinformation bezüglich der in der Umgebung vorherrschenden, durch Störungen des Erdmagnetfeldes entstandenen Magnetkompassrichtung ausgegeben wird.

7. Kommunikationssystem nach Anspruch 6, **dadurch gekennzeichnet, dass** als zusätzliche Information die Arbeitsgenauigkeit des Kompasses in der Bakenumgebung ausgegeben wird.

8. Kommunikationssystem nach einem der vorhergehenden Ansprüche, **gekennzeichnet durch** eine Umschaltbarkeit der Navigationsbake von einem passiven Zustand in einen aktiven Zustand, wenn ein von einem mobilen Gerät ausgehendes Signal empfangen wird, das angibt, dass das mobile Gerät einen Dienst benötigt.

9. Kommunikationssystem nach einem der vorhergehenden Ansprüche, **dadurch gekennzeichnet, dass** an der Navigationsbake oder in deren Nähe ein von Personen lesbarer Pfeil oder ein ähnliches Zeichen aufgebracht ist, das eine Himmelsrichtung anzeigt, so dass die Person das mobile Gerät entsprechend dem Pfeil halten und damit gegebenenfalls auf dem mobilen Gerät angezeigten Richtungsanweisungen zur Wegführung korrekt folgen kann.

10. Kommunikationssystem nach einem der vorhergehenden Ansprüche, **dadurch gekennzeichnet, dass** die Navigationsbake ein Trägersignal, beispielsweise auf Funkbasis oder optischer Basis, aussendet, das vom mobilen Gerät einer Nutzerperson peilungsfähig ist.

11. Kommunikationssystem nach einem der vorhergehenden Ansprüche, **gekennzeichnet durch** eine Kommunikation der Navigationsbake mit dem mobilen Gerät drahtlos mittels Funk-, Infrarot- oder Ultraschallsignalen oder drahtgebunden.

12. Kommunikationssystem nach Anspruch 11, **dadurch gekennzeichnet, dass** bei Kommunikation mittels Funksignalen für den Träger Funkfrequenzen ausgewählt sind, welche durch besonders hohe Absorptionswerte der Luft nur für eine kurze Reichweite der Funksignale sorgen.

13. Kommunikationssystem nach einem der vorhergehenden Ansprüche, **dadurch gekennzeichnet, dass** bei der Nävigationsbake neben der Punkt-zu-Punkt-Verbindung zum mobilen Gerät ein Betrieb im Broadcast-Modus vorgesehen ist und dass darüber ihr Dienst und/oder ihre Position angekündigt werden.

14. Kommunikationssystem nach einem der vorhergehenden Ansprüche, **gekennzeichnet durch** die Fähigkeit der Navigationsbake, Daten von mobilen Geräten zu anderen Einheiten oder zwischen zwei anderen derartigen Navigationsbaken weiterzuleiten und somit als sogenannter Router zu fungieren.

15. Kommunikationssystem nach einem der vorhergehenden Ansprüche, **dadurch gekennzeichnet, dass** die Navigationsbake fest eingebaut ist.

16. Kommunikationssystem nach einem der Ansprüche 1 bis 14, **dadurch gekennzeichnet, dass** die Navigationsbake in oder an einem Fahrzeug aufgebaut ist.

17. Kommunikationssystem nach einem der Ansprüche 1 bis 14, **dadurch gekennzeichnet, dass** die Navigationsbake beweglich ist.

18. Kommunikationssystem nach Anspruch 17, **dadurch gekennzeichnet, dass** die Navigationsbake am Körper einer Person getragen wird.

19. Kommunikationssystem nach einem der vorhergehenden Ansprüche, **dadurch gekennzeichnet, dass** die Navigationsbake vom Bakenbetreiber ihre zum Betrieb notwendigen Informationen über das Stromnetz oder über Funk, Licht oder Infrarot oder akustisch oder über Kabel erhält.

20. Kommunikationssystem nach einem der Ansprüche 1 bis 18, **dadurch gekennzeichnet, dass** die Navigationsbake vom Bakenbetreiber ihre zum Betrieb notwendigen Informationen über einen einlesbaren Speicher erhält.

21. Kommunikationssystem nach einem der vorhergehenden Ansprüche, **dadurch gekennzeichnet, dass** die Verteilung der Algorithmen auf verschiedene Rechnereinheiten mittels Remote Method Invocation, abgekürzt RMI, vorgenommen wird.

## Claims

1. A communications system comprising a communicative navigation beacon and at least one personal mobile electronic device for navigation and/or routing, the navigation beacon for beaming position data as a first service and for communicating information data of other services to mobile electronic devices making use of a lookup service being equipped with a communications interface realized as a flexible interface for implementing a protocol convention with the at least one mobile electronic device, **characterized in that** the communications system is equipped to carry out the following steps: that a primitive service exceeding the service of merely indicating a position is entered in the lookup service realized as an algorithm, that the primitive service in the form of the algorithm is communicated from the navigation beacon via the communications interface to a mobile electronic device using the lookup service, that the primitive service communicated in the form of the algorithm to the mobile device describes a route to a destination and/or an intermediate destination or recognizes, alters and updates a status object representing the status of the user as stored on the mobile electronic device together with its content and properties, and that the algorithm communicated to the mobile electronic device via the communications interface communicates with the navigation beacon for fetching information as regards the corresponding destinations or intermediate destinations or for fetching and noting an update of the status object of the mobile electronic device.

2. The communications system as set forth in claim 1, **characterized in that** via the communications interface algorithms and/or algorithm invokements handling beacon control are made available to the mobile device of the user.

3. The communications system as set forth in claim 2, **characterized in that** the algorithms are devised so that writing and/or changing information of the status object on the mobile device or such information is available to the mobile device.

4. The communications system as set forth in claim 2 or 3, **characterized in that** the algorithms are devised so that the mobile device is prompted to beam a certain signal such that its bearing and/or location is obtained by the navigation beacon.

5. The communications system as set forth in claim 3, **characterized in that** the information for altering by the algorithms relates to route(s), maps, vehicle arrival times, particularly of a taxi, bus, train in which a mobile device is located as used by a traveller, the current position of the beacon or mobile device, timetables and routes of public transport vehicles or indications as to local events, restaurants and hotels, tourist information and local tourist offices, filling stations, shops, offices, hospitals and the like.

6. The communications system as set forth in any of the preceding claims, **characterized in that** a compensation information as to the local predominant magnet compass direction due to disturbances in the earth's magnetic field is beamed as information.

7. The communications system as set forth in claim 6, **characterized in that** the working accuracy of the compass local to the beacon is beamed as additional information.

8. The communications system as set forth in any of the preceding claims, **characterized in that** the navigation beacon is switchable from a passive status to an active status when a signal beamed by a mobile device is received, indicating that the mobile device requires a service.

9. The communications system as set forth in any of the preceding claims, **characterized in that** on or in the vicinity of the navigation beacon a humanly readable arrow or similar symbol indicates a cardinal point so that the user of a mobile device can point the device for correctly following the routing direction instructions as may be displayed on the mobile device.

10. The communications system as set forth in any of the preceding claims, **characterized in that** the navigation beacon beams a carrier signal, for example on a wireless or optical basis, the direction of which can be detected by the personal mobile device.

11. The communications system as set forth in any of the preceding claims, **characterized in that** the navigation beacon communicates with the mobile device wireless by means of radio, infrared or ultrasound signals or wired.

12. The communications system as set forth in claim 11, **characterized in that** in radio communication radio frequencies are selected for the carrier which ensure only a short range of the radio signals due to the particularly high absorption values of the air.

13. The communications system as set forth in any of the preceding claims, **characterized in that** for the navigation beacon in addition to a point-to-point connection to the mobile device a broadcast operating mode is provided via which its service and/or position are signalled.

14. The communications system as set forth in any of the preceding claims, **characterized in that** the navigation beacon is capable of relaying data from mobile devices to other units or between two other different type navigation beacons in thus functioning as a router.

15. The communications system as set forth in any of the preceding claims, **characterized in that** the navigation beacon is installed stationary.

16. The communications system as set forth in any of the claims 1 to 14, **characterized in that** the navigation beacon is incorporated in or on a vehicle.

17. The communications system as set forth in any of the claims 1 to 14, **characterized in that** the navigation beacon is mobile.

18. The communications system as set forth in claim 17, **characterized in that** the navigation beacon is personalized portable.

19. The communications system as set forth in any of the preceding claims, **characterized in that** the navigation beacon receives from the beacon server the information necessary for its operation via the power grid or by radio, light or infrared or by sound or wired.

20. The communications system as set forth in any of the claims 1 to 18, **characterized in that** the navigation beacon receives from the beacon server the information necessary for its operation via a writable memory.

21. The communications system as set forth in any of the preceding claims, **characterized in that** the algorithms are distributed to various arithmetic units by means of remote method invocation (RMI).

## Revendications

1. Système de communication, se composant d'une balise de navigation capable de communiquer et d'au moins un appareil électronique mobile porté par une personne en vue de sa navigation et/ou pour indiquer sa route, dans lequel, à des fins de fournir des données de position en tant que premier service et de communiquer des données d'information d'autres services aux appareils électroniques mobiles utilisant un service de recherche, la balise de navigation est équipée d'une interface de communication qui est réalisée sous forme d'une interface flexible pour exécuter conformément à des protocoles un accord concernant un service avec le au moins un appareil électronique mobile, **caractérisé en ce que** le système de communication est agencé afin d'effectuer les étapes suivantes :
un service primitif allant au-delà du service de pure indication de position est inscrit au niveau du service de recherche réalisé sous forme d'algorithme,
le service primitif sous forme de l'algorithme est communiqué par la balise de navigation par le biais de l'interface de communication à un appareil terminal mobile utilisant le service de recherche ;
le service primitif communiqué à l'appareil mobile sous forme d'un algorithme décrit un chemin à une destination et/ou une destination intermédiaire ou reconnaît, modifie et actualise un objet d'état avec ses contenus et propriétés qui représente l'état de l'utilisateur et est enregistré sur l'appareil terminal électronique mobile ; et
l'algorithme communiqué à l'appareil électronique mobile par le biais de l'interface de communication communique avec la balise de navigation afin de demander des informations se rapportant aux destinations ou aux destinations intermédiaires concernées ou afin de demander et de noter une actualisation de l'objet d'état de l'appareil électronique mobile.

2. Système de communication selon la revendication 1, **caractérisé en ce que**, par le biais de l'interface de communication, il est mis à disposition de l'appareil mobile les utilisant des algorithmes et/ou des appels d'algorithme qui prennent en charge la commande de la balise.

3. Système de communication selon la revendication 2, **caractérisé en ce que** les algorithmes sont conçus de manière telle qu'ils lisent et/ou modifient des informations de l'objet d'état sur l'appareil mobile ou les informations qui sont mises à disposition de l'appareil mobile.

4. Système de communication selon la revendication 2 ou 3, **caractérisé en ce que** les algorithmes sont conçus de manière telle que l'appareil mobile soit amené à émettre un certain signal afin d'être repéré et/ou localisé par la balise de navigation.

5. Système de communication selon la revendication 3, **caractérisé en ce que** les informations modifiables par les algorithmes sont l'itinéraire ou les itinéraires à prendre par une personne en voyage, des cartes, des heures d'arrivée de véhicules, en particulier de taxi, bus, train, dans lesquels se trouve un appareil mobile, la position actuelle de la balise ou de l'appareil mobile, des horaires et des routes de moyens de transport ou des indications relatives à des manifestations, des restaurants et des hôtels dans les environs, à des informations touristiques, des offices de tourisme, des stations-service, des magasins, des services publics, des hôpitaux et des choses de ce genre.

6. Système de communication selon l'une quelconque des revendications précédentes, **caractérisé en ce qu'**est émise en tant qu'information une information de compensation relative à la direction du compas magnétique prévalant dans les environs et due à des perturbations du champ magnétique terrestre.

7. Système de communication selon la revendication 6, **caractérisé en ce qu'**est émise en tant qu'information supplémentaire la précision de fonctionnement du compas dans les environs de la balise.

8. Système de communication selon l'une quelconque des revendications précédentes, **caractérisé par** une possibilité de passer la balise de navigation d'un état passif à un état actif en cas de réception d'un signal émis par un appareil mobile et indiquant que l'appareil mobile a besoin d'un service.

9. Système de communication selon l'une quelconque des revendications précédentes, **caractérisé en ce que** sur la balise de navigation ou à proximité de celle-ci est installée une flèche lisible par des personnes ou un repère similaire qui indique un point cardinal de sorte que la personne puisse tenir l'appareil mobile conformément à la flèche et puisse ainsi suivre correctement les instructions de direction affichées sur l'appareil mobile à des fins d'indiquer la route à suivre.

10. Système de communication selon l'une quelconque des revendications précédentes, **caractérisé en ce que** la balise de navigation émet un signal de porteuse, par exemple à base de signaux radioélectriques ou optiques, lequel est apte à un repérage radiogoniométrique par l'appareil mobile d'une personne utilisatrice.

11. Système de communication selon l'une quelconque des revendications précédentes, **caractérisé par** une communication de la balise de navigation avec l'appareil mobile sans fil au moyen de signaux radioélectriques, infrarouges ou ultrasonores ou par liaison filaire.

12. Système de communication selon la revendication 11, **caractérisé en ce que** lors de la communication au moyen de signaux radioélectriques sont sélectionnées pour la porteuse des fréquences radioélectriques qui ne pourvoient qu'à une courte portée des signaux radioélectriques en raison de valeurs d'absorption de l'air particulièrement élevées.

13. Système de communication selon l'une quelconque des revendications précédentes, **caractérisé en ce qu'**il est prévu au niveau de la balise de navigation un fonctionnement en mode Diffusion en plus d'une liaison point à point à l'appareil mobile et **en ce que** son service et/ou sa position sont annoncés par le biais de ce mode.

14. Système de communication selon l'une quelconque des revendications précédentes **caractérisé par** l'aptitude de la balise de navigation à transmettre des données d'appareils mobiles à d'autres unités ou entre deux autres balises de navigation de ce type et ainsi à servir de ce que l'on appelle un routeur.

15. Système de communication selon l'une quelconque des revendications précédentes, **caractérisé en ce que** la balise de navigation est montée en position fixe.

16. Système de communication selon l'une des revendications 1 à 14, **caractérisé en ce que** la balise de navigation est montée dans ou sur un véhicule.

17. Système de communication selon l'une des revendications 1 à 14, **caractérisé en ce que** la balise de navigation est mobile.

18. Système de communication selon la revendication 17, **caractérisé en ce que** la balise de navigation est portée sur le corps d'une personne.

19. Système de communication selon l'une quelconque des revendications précédentes, **caractérisé en ce que** la balise de navigation reçoit de l'exploitant de la balise ses informations nécessaires à son fonctionnement par le biais du réseau électrique ou par des signaux radioélectriques, lumineux, infrarouges ou acoustiques ou par câble.

20. Système de communication selon une des revendications 1 à 18, **caractérisé en ce que** la balise de navigation reçoit de l'exploitant de la balise ses informations nécessaires à son fonctionnement par le biais d'une mémoire accessible en lecture.

21. Système de communication selon l'une quelconque des revendications précédentes, **caractérisé en ce que** la répartition des algorithmes sur différentes unités de calcul est effectuée au moyen de Remote Method Invocation, abrégée en RMI.
